# EUROPÄISCHE PATENTSCHRIFT

(11) **EP 0 915 106 B1**
(45) Veröffentlichungstag und Bekanntmachung des Hinweises auf die Patenterteilung: **17.05.2000**
(21) Anmeldenummer: 98118555.6
(22) Anmeldetag: 01.10.1998
(51) Int. Cl.: C08F 14/06, C08F 2/22

(54) **Verfahren zur Herstellung von Homo- und Mischpolymerisaten des Vinylchlorids**
Process for producing homopolymers and copolymers of vinyl chloride
Procédé de fabrication d'homopolymères et de copolymères du chlorure de vinyle

(30) Priorität: 10.10.1997 DE 19744845
(43) Veröffentlichungstag der Anmeldung: 12.05.1999
(73) Patentinhaber: Vinnolit Kunststoff GmbH, D-85737 Ismaning (DE)
(72) Erfinder: Hohenadel, Robert Dr., 84543 Winhoering (DE); Puhe, Rudolf Dr., 84489 Burghausen (DE); Baer, Eberhard Dr., 84489 Burghausen (DE); Lux, Alfred, 84508 Burgkirchen (DE)
(74) Vertreter: Schuderer, Michael, Dr.

(56) Entgegenhaltungen:
- DD-A- 288 160
- US-A- 3 546 154
- US-A- 4 098 978

## Beschreibung

Die Erfindung betrifft ein Verfahren zur Herstellung von Homo- und Mischpolymerisaten des Vinylchlorids durch diskontinuierliche Polymerisation in wässriger Emulsion in Gegenwart einer Emulgatorkombination aus mindestens zwei Emulgatoren aus der Gruppe der anionischen und nichtionischen Emulgatoren, welche während der Polymerisation zudosiert werden.

Verpastbare Homo- und Mischpolymerisate von Vinylchlorid, welche sich zur Herstellung von Plastisolen eignen, werden nach dem Emulsionspolymerisationsverfahren oder Mikrosuspensionspolymerisationsverfahren in Gegenwart von einem oder mehreren Emulgatoren hergestellt. Bei der Emulsionspolymerisation beeinflußt die Art und Menge der dabei eingesetzten Tenside nicht nur die Pastenviskosität maßgeblich, sondern auch die Endprodukteigenschaften des Polymerisats, beispielsweise Transparenz, antistatische Eigenschaften, Verschäumbarkeit und Wasseraufnahme. In vielen Fällen können die geforderten Endprodukteigenschaften nicht mit nur einem Emulgator, sondern nur mit Emulgatorgemischen erreicht werden.

Zu diesem Zweck werden entweder Emulgatorgemische bei einstufigen Polymerisationsverfahren vorgelegt oder bei Tensiddosierungspolymerisationen während des Polymerisationsvorgangs zudosiert, oder dem auspolymerisierten Latex vor der Sprühtrocknung ein oder mehrere weitere Emulgatoren nachträglich zugegeben.

Ein einstufiges Emulsionspolymerisationsverfahren, bei dem eine Emulgatormischung vorgelegt wird, ist beispielsweise in der DE-A 2801575 (US-A 4,071,675) beschrieben. Nachteilig hierbei ist, daß die Emulsionspolymerisation von Vinylchlorid nach dem Einstufenverfahren in der Regel zur Bildung sehr kleiner Polymerteilchen führt. Die damit erhaltenen Latices besitzen eine geringe Latexstabilität und daraus hergestelltes Pasten-PVC ist höherviskos.

Zur Verbesserung der Latexstabilität und Pastenviskosität wird im Stand der Technik empfohlen, die Emulgatoren zu dosieren, wobei eine Vielzahl verschiedener Varianten beschrieben ist. Aus der DE-A 3343766 und der EP-A 90142 (US-A 4,631,324) ist bekannt, zur Herstellung von verpastbaren Vinylchloridpolymerisaten einen Teil des Emulgatorgemisches vorzulegen und den Rest des Gemisches im Verlauf der Polymerisation zuzudosieren. In der DE-A 2633833 und der DE-A 3049008 sind Verfahren beschrieben, bei denen Emulgatorgemische während der Polymerisation in Abhängigkeit vom Polymerisationsumsatz oder der Oberflächenspannung des Polymerisationsansatzes zudosiert werden. Die Polymerisation von Pasten-PVC in Gegenwart von Saatlatex und eines Emulgatorgemisches ist beispielsweise in der DE-A 2542283 (US-A 4,046,730) beschrieben. Dabei wird der Saatlatex vorgelegt und eine Teilmenge des Emulgatorgemisches oder eine Komponente des Emulgatorgemisches wird vorgelegt, und der Rest des Gemisches oder die weiteren Komponenten des Gemisches werden während der Polymerisation zudosiert. Der Nachteil der genannten gemischten Emulgatordosierungen besteht darin, daß durch die Verwendung von Tensidgemischen während der Polymerisation, bei denen mindestens eine Komponente in der Regel aus Gründen der Beeinflußung der Endprodukteigenschaften eingesetzt wird, die Rheologie durch diese negativ beeinflußt wird, das heißt es müssen in der Regel höhere Pastenviskositäten hingenommen werden.

Bei der Nachdosierung von Emulgatoren zum auspolymerisierten Latex, das heißt zusätzliche Tensiddosierung vor oder während der Sprühtrocknung, bleiben zwar die gewünschten rheologischen Eigenschaften der Polymerisate weitgehend erhalten, durch die Nachdosierung ist allerdings der Gesamttensidgehalt sehr hoch. Hohe Tensidkonzentrationen im Polymerisat führen jedoch zu unerwünschten Nebeneffekten wie verstärkte Wasseraufnahme (insbesondere bei Außenanwendung prohibitiv), Farbveränderungen, Viskositätsschwankungen, Verschlechterung der Transparenz und Ausschwitzerscheinungen gekoppelt mit Oberflächenglanz, Geruch, Fogging, Klebrigkeit.

In der DE-A 1745485 (US-A 3546154) wird ein Verfahren zur Emulsionspolymerisation von Vinylchlorid beschrieben, bei dem zum Erhalt von Polymerdispersionen mit möglichst großen Primärpartikeln zu Beginn oder während der Polymerisation nur schlecht emulgierende, kurzkettige Tenside mit einer Kettenlänge von 5 bis 9 C-Atomen zugegeben werden und erst in einer zweiten Polymerisationsphase oder nach Abschluß der Polymerisation gut emulgierende, langkettige Tenside zugegeben werden. Nachteilig ist hierbei, daß die schlecht emulgierenden, kurzkettigen Tenside eine nur schwache Stabilisierung des polymerisierenden Latex gewährleisten, so daß bei stärkerer Rührung leicht Koagulation eintreten kann, bei schwächerer Rührung hingegen mit Phasentrennung zu rechnen ist. Führt man die Polymerisation bis zu höheren Umsätzen mit ausschließlich schwach emulgierenden Tensiden durch, müssen zudem relativ hohe Emulgatormengen dosiert werden, die nach Stabilisierung des Latex mit einem guten Tensid noch weiter erhöht werden.

Der Erfindung lag daher die Aufgabe zugrunde, ein Verfahren zur Herstellung von Homo- und Mischpolymerisaten des Vinylchlorids durch diskontinuierliche Polymerisation in wässriger Emulsion zu entwickeln, mit dem auch beim Einsatz von Emulgatorkombinationen, welche Tenside enthalten, die zur Einstellung von anzustrebenden Endprodukteigenschaften eingesetzt werden, eine Minimierung der mit dem Polymerisationsprodukt erhältlichen Pastenviskosität bei gleichzeitig niedriger Gesamttensidkonzentration erhalten wird.

Überraschenderweise ist dies durch die sequentielle Tensiddosierung der Emulgatorkombinationen gelungen, bei der die Bestandteile der Emulgatorkombination nacheinander zudosiert werden.

Gegenstand der Erfindung ist ein Verfahren zur Herstellung von Homo- und Mischpolymerisaten des Vinylchlorids durch diskontinuierliche Polymerisation in wässriger Emulsion in Gegenwart einer Emulgatorkombination aus mindestens zwei Emulgatoren aus der Gruppe der anionischen und nichtionischen Emulgatoren, welche während der Polymerisation zudosiert werden, dadurch gekennzeichnet, daß in der ersten Phase der Polymerisation mindestens ein Emulgator der Emulgatorkombination mit mindestens 10 C-Atomen zudosiert wird und frühestens ab Erreichen eines Polymerisationsumsatzes von 10 % mit der Zudosierung der verbleibenden Emulgatoren der Emulgatorkombination begonnen wird.

Bei der Polymerisation werden als Monomere Vinylchlorid oder Mischungen von Vinylchlorid mit damit copolymerisierbaren, ethylenisch ungesättigten Monomeren eingesetzt. Beispiele für geeignete Comonomere sind Vinylester von gesättigten Carbonsäuren mit 2 bis 12 C-Atomen, wie Vinylacetat, Vinylpropionat, Vinyllaurat oder Versaticsäurevinylester, wie VeoVa^{R}9 und VeoVa^{R}10; (Meth)acrylsäureester von Alkoholen mit 1 bis 12 C-Atomen, wie Methylacrylat, Methylmethacrylat, Ethylacrylat, n-Butylacrylat, n-Butylmethacrylat, t-Butylacrylat, 2-Ethylhexylacrylat; ethylenisch ungesättigte Mono- und Dicarbonsäuren, wie Acrylsäure, Methacrylsäure, Maleinsäure, Fumarsäure; Mono- und Diester von ethylenisch ungesättigten Dicarbonsäuren, wie Diisopropylfumarat; Vinylaromaten, wie Styrol und Vinyltoluol; Olefine, wie Ethylen und Propylen. Falls Mischungen von Vinylchlorid mit einem oder mehreren der genannten Comonomere eingesetzt werden, beträgt der Anteil der Comonomere vorzugsweise bis zu 30 Gew.%, bezogen auf das Gesamtgewicht der Monomermischung.

Die Polymerisation kann auch unter Vorlage von Saatlatices auf der Basis von Vinylchlorid-Homopolymeren oder von Vinylchlorid-Mischpolymerisaten mit den genannten Comonomeren durchgeführt werden.

Als Emulgatoren kommen die für die Emulsionspolymerisation von Vinylchlorid einschlägig bekannten anionischen und nichtionischen Tenside, welche mindestens 10 C-Atome enthalten, in Betracht. Bevorzugt werden anionische Tenside eingesetzt. Geeignete anionische Emulgatoren mit mindestens 10 C-Atomen sind beispielsweise Alkylsulfate mit einer Kettenlänge von 10 bis 18 C-Atomen, Alkyl- und Alkylarylethersulfate mit 10 bis 24 C-Atomen im hydrophoben Rest und bis zu 40 Ethylenoxid- oder Propylenoxid-Einheiten, Alkyl- und Alkylarylsulfonate mit 10 bis 24 C-Atomen, Alkyl-Diphenyloxid-Disulfonate, Ölsäuresulfonate, Ester und Halbester der Sulfobernsteinsäure mit einwertigen Alkoholen oder Alkylphenolen, Alkyl- und Alkenylcarboxylate mit einer Kettenlänge von 10 bis 18 C-Atomen. Geeignete nichtionische Tenside mit mindestens 10 C-Atomen sind beispielsweise Alkylpolyglykolether oder Alkylarylpolyglykolether mit jeweils 4 bis 40 Ethylenoxideinheiten, Alkyl- und Alkenylalkohole mit 12 bis 20 C-Atomen, ethoxylierte Alkyl- und Alkenylalkohole mit 12 bis 20 C-Atomen und ethoxylierte Alkylphenole.

Die Auswahl der Tenside für die Emulgatorkombination hängt von der gewünschten Pastenviskosität und den angestrebten Endprodukteigenschaften des Vinylchloridpolymerisats ab. Dem Fachmann ist der Zusammenhang zwischen Tensidauswahl und Pastenviskosität und Endprodukteigenschaften bekannt:

Beispielsweise führen die genannten Alkylsulfate in der Regel zur Bildung kleiner Primärteilchen und somit zu hochviskosen Plastisolen und zu Endprodukten mit sehr guter chemischer Verschäumbarkeit. Beispiele für geeignete Alkylsulfate sind Alkali- (Na-, K-) und Ammonium-Laurylsulfat, -Myristylsulfat, Palmitylsulfat und -Stearylsulfat.

Die Alkylcarboxylate ergeben bei deren Verwendung in Form von Ammoniumsalzen beispielsweise niederviskose Plastisole und führen zu Endprodukten mit geringer Wasseraufnahme. Beispiele für Alkylcarboxylate sind Alkali- (Na-, K-) und Ammonium-Laurat, -Myristat, -Palmitat und -Stearat.

Die langkettigen Sulfobernsteinsäureester bewirken das Wachstum großer Primärpartikel und führen zu niederviskosen Plastisolen. Gebräuchlich sind beispielsweise die Alkali- (Na-, K-) oder Ammoniumsalze von Sulfobernsteinsäureestern deren Alkoholteil 6 bis 14 C-Atome enthält wie Na-Dihexylsulfosuccinat, -Dioctylsulfosuccinat, -Di-2-Ethylhexylsulfosuccinat, -Dicyclohexylsulfosuccinat, -Didecylsulfosuccinat, -Ditridecylsulfosuccinat.

Alkylbenzolsulfonate führen zu Polymerisaten mit sehr guter Transparenz. Beispiele hierfür sind Alkali- (Na-, K-) und Ammonium-Octylbenzolsulfonat, -Decylbenzolsulfonat, -Dodecylbenzolsulfonat, -Tetrapropylenbenzolsulfonat.

Alkylsulfonate führen zu Endprodukten mit sehr guten antistatischen Eigenschaften. Beispiele hierfür sind Alkali- (Na-,K-) und Ammonium-Decylsulfonat, -Dodecylsulfonat, -Myristylsulfonat, -Palmitylsulfonat, -Stearylsulfonat und Gemische von Alkylsulfonaten wie Mersolat K 30 (Handelsname der Bayer, n-Alkansulfonate mit Kettenlänge von 13 bis 17 C-Atomen).

In einer bevorzugten Ausführungsform werden in der ersten Phase der Polymerisation ein oder mehrere Emulgatoren der Emulgatorkombination dosiert, welche zu Produkten mit niederer Pastenviskosität führen. Als erste Phase der Polymerisation gilt dabei der Zeitraum zwischen der Initiierung der Polymerisation und dem Abschluß der Dosierung der zuerst dosierten Emulgatoren der Emulgatorkombination. Besonders bevorzugt werden in der ersten Phase ein oder mehrere Emulgatoren zudosiert aus der Gruppe umfassend Alkylarylsulfonate mit 10 bis 24 C-Atomen, Ester der Sulfobernsteinsäure mit einwertigen Alkoholen mit mindestens 10 C-Atomen, Alkylcarboxylate mit einer Kettenlänge von 10 bis 18 C-Atomen. Am meisten bevorzugt wird die Ausführungsform, bei der in der ersten Phase ein oder mehrere Emulgatoren aus der Gruppe der Alkylarylsulfonate mit 10 bis 24 C-Atomen zudosiert werden.

Zu den nachträglich zuzudosierenden Emulgatoren zählen vorzugsweise Tenside, welche zur Einstellung bestimmter Endprodukteigenschaften eingesetzt werden. Typische Beispiele für geeignete Emulgatoren sind Alkylsulfate und Alkylsulfonate mit einer Kettenlänge von 10 bis 18 C-Atomen. Läßt sich die Reihenfolge der Tensiddosierung aufgrund der obengenannten, beispielhaft aufgeführten Zusammenhänge nicht abschätzen, kann über Testpolymerisationen die exakte Wahl des zuerst zu dosierenden Tensids oder Tensidgemisches durchgeführt werden.

Üblicherweise werden die Emulgatoren in einer Gesamtmenge von 0.5 bis 2 Gew.%, bezogen auf das Gesamtgewicht der Monomere, eingesetzt. Die Aufteilung der Einsatzmenge auf die erste bzw. zweite Phase der Polymerisation hängt von den im Einzelfall angestrebten rheologischen Eigenschaften bzw. Endprodukteigenschaften ab und muß im Einzelfall ermittelt werden. Als zweite Phase der Polymerisation gilt dabei der Zeitraum zwischen dem Beginn der Zudosierung der verbleibenden Emulgatoren der Emulgatorkombination und dem Abschluß der Polymerisation.

Die Dauer der Tensiddosierung in der ersten Phase der Polymerisation hängt primär von der im Endprodukt gewünschten Emulgatorkombination und von der im Endprodukt gewünschten Emulgatormenge ab. Vorzugsweise wird die Emulgatordosierung in der ersten Phase bis zu einem Polymerisationsumsatz von maximal 40 % durchgeführt, besonders bevorzugt bis zu einem Polymerisationsumsatz von maximal 20 %. Vorzugsweise wird mit der Dosierung der verbleibenden Emulgatoren der Emulgatorkombination nach Abschluß der Dosierung der Emulgatoren der ersten Phase begonnen, das heißt es wird sequentiell dosiert.

Die Dosierung der Emulgatorkomponenten kann sowohl in der ersten Stufe als auch in der zweiten Stufe kontinuierlich oder auch portionsweise durchgeführt werden, vorzugsweise werden die Emulgatorkomponenten kontinuierlich dosiert. Bevorzugt erfolgt die Zugabe der Emulgatoren in Form deren wässriger Lösungen, wobei bei der Dosierung von mehreren Emulgatoren die wässrigen Lösungen getrennt oder als Gemisch dosiert werden können.

Zur Initiierung der Polymerisation werden die für die Emulsionspolymerisation üblichen wasserlöslichen Initiatoren in einer Menge von vorzugsweise 0.01 bis 0.5 Gew.%, bezogen auf das Gesamtgewicht der Monomere, eingesetzt. Beispiele für geeignete Initiatoren sind Ammonium- und Kaliumperoxodisulfat, Wasserstoffperoxid, Alkylhydroperoxide wie t-Butylhydroperoxid, Ammonium- und Kaliumperoxodiphosphat. Die Initiierung kann entweder direkt durch Temperaturerhöhung oder bei niederen Temperaturen durch Einsatz von Reduktionsmitteln, gegebenenfalls in Kombination mit katalytisch zersetzend wirkenden Schwermetallsalzen, wie Kupfersulfat, erfolgen. Geeignete Reduktionsmittel sind beispielsweise Natriumformaldehydsulfoxylat, Natriumsulfit, Natriumhydrogensulfit, Dithionit und Ascorbinsäure, welche vorzugsweise in einer Menge von 0.01 bis 0.5 Gew.%, bezogen auf das Gesamtgewicht der Monomere, eingesetzt werden.

Die Emulsionspolymerisation wird in den für die Vinylchloridpolymerisation üblichen Druckreaktoren bei einer Temperatur von üblicherweise 30°C bis 90°C durchgeführt. Im allgemeinen wird das Vinylchlorid teilweise vorgelegt und der Rest im Verlauf der Polymerisation zudosiert. Bei der Copolymerisation von Vinylchlorid mit weiteren Comonomeren können diese vorgelegt werden oder ganz oder teilweise dosiert werden. Der Initiator wird im allgemeinen dosiert. Vorzugsweise wird mit dem Start der Initiatordosierung die Dosierung der Emulgatoren gestartet.

Der für die Polymerisation gewünschte pH-Bereich kann in bekannter Weise durch Säuren, Basen und übliche Puffersalze, wie Alkaliphosphate und Alkalicarbonate, eingestellt werden. Zur Molekulargewichtseinstellung können bei der Polymerisation die üblicherweise verwendeten Regler, wie Mercaptane, Aldehyde und Chlorkohlenwasserstoffe, eingesetzt werden.

Die mit der erfindungsgemäßen Verfahrensweise erhältlichen Polymerisate eignen sich insbesondere für die Verarbeitung als Plastisol (Pasten-PVC). Dazu wird der Latex in bekannter Weise getrocknet, beispielsweise mittels Sprühtrocknung in den üblichen Sprühtrocknungseinrichtungen. Die Herstellung der Plastisole erfolgt mittels bekannter Verfahren, wobei im allgemeinen 100 Gewichtsteile Polymerisat mit 40 bis 150 Gewichtsteilen Weichmacher vermischt werden. Als Weichmacher geeignet sind alle monomeren und polymeren Verbindungen, die üblicherweise als Weichmacher für Polyvinylchlorid und dessen Mischpolymerisate verwendet werden. Gegebenenfalls können den Plastisolen noch übliche Zusatzstoffe, wie Stabilisatoren, Farbstoffe, Pigmente und Füllstoffe, zugesetzt werden. Die damit erhältlichen Plastisole eignen sich zur Herstellung von Beschichtungen, beispielsweise durch Aufstreichen, Besprühen oder Tauchen, sowie zur Herstellung von gegossenen Formkörpern und von Schaumstoffen.

Insbesondere bei der Herstellung von Pasten-PVC werden mit der erfindungsgemäßen Verfahrensweise Vinylchloridpolymerisate erhalten, welche zu einer Minimierung der Pastenviskosität von PVC-Plastisolen führen, bei gleichzeitig niedriger Gesamttensidkonzentration der unter Berücksichtigung von angestrebten Endprodukteigenschaften ausgewählten Emulgatoren.

Die nachfolgenden Beispiele dienen zur weiteren Erläuterung der Erfindung:

### Beispiel 1:

In einem mit einem Rührwerk ausgerüsteten Autoklaven von 1500 l Inhalt, der mit Heiz- und Kühleinrichtung versehen war, wurden unter Ausschluß von Luftsauerstoff 500 kg entsalztes Wasser, 192 g Natriumhydrogencarbonat und 245 kg Vinylchlorid vorgelegt. Des weiteren enthielt die Vorlage zur Initiierung des redoxkatalysierten Peroxidzerfalls 0,8 g CuSO₄·5H₂O sowie 160 g Natriumsulfit. Die Reaktionsmischung wurde auf 57°C aufgeheizt. Durch Zudosieren einer 0,375%igen wässrigen Kaliumperoxodisulfat(KPS)-Lösung wurde die Reaktion gestartet. Die KPS-Dosierung wurde so eingestellt, daß eine Temperaturdifferenz von 8°C zwischen Reaktorinhalt und Kühlmantel resultierte. Mit Beginn der KPS-Dosierung wurden über einen Zeitraum von 6 Stunden weitere 235 kg Vinylchlorid linear dosiert. Ebenfalls mit Dosierbeginn der KPS-Dosierung wurde die Tensiddosierung wie folgt eingefahren:
Zwischen einer Polymerisationszeit von 0 bis 2 Stunden wurden kontinuierlich insgesamt 12 l einer 10%igen wässrigen Ammoniumlaurat-Lösung zudosiert. Der Polymerisationsumsatz betrug nach 2 Stunden etwa 20%.
Im Anschluß daran wurden bis zu einer Polymerisationszeit von 8 Stunden kontinuierlich 36 l einer 10%igen wässrigen Natrium-Alkansulfonat-Lösung (Mersolat K30 der Bayer AG) zudosiert.
Nach Polymerisationsende (Druckabfall) wurden dem Reaktionsgemisch 480 g Natriumcarbonat zugegeben und anschließend entgast.
Zur Charakterisierung des Polymerisats wurde dessen K-Wert nach Fikentscher (DIN 53726) bestimmt. Darüber hinaus wurden der Festgehalt, der pH-Wert und die Oberflächenspannung der Dispersion bestimmt.
Die Aufarbeitung der Dispersion erfolgte in einer Sprühtrocknungsanlage mittels Zweistofftechnologie (Luft/Latex) bei einer Eingangstemperatur von 160°C und einer Ausgangstemperatur von 65°C. Anschließend wurde der Tensidgehalt im PVC-Pulver bestimmt.
Zur Bestimmung der Pastenviskosität wurde aus 100 Gewichtsteilen des so erhaltenen PVC-Pulvers und 60 Gewichtsteilen Di-2-Ethylhexylphthalat (DOP) eine Paste nach DIN 54800 hergestellt und deren Viskosität nach 1 Stunde Lagerung bei 23°C bei einer Scherung von 16 s⁻¹ gemessen.

### Beispiel 2:

Es wurde, wie in Beispiel 1 beschrieben, vorgegangen. Die Tensiddosierung wurde aber wie folgt durchgeführt:
Polymerisationszeit 0 bis 4 Stunden: Dosierung von 24 l einer 10%igen wässrigen Ammoniumlaurat-Lösung. Der Polymerisationsumsatz betrug nach 4 Stunden etwa 40%.
Polymerisationszeit 4 bis 8 Stunden: Dosierung von 24 l einer 10%igen wässrigen Natrium-Alkansulfonat-Lösung (Mersolat K30 der Bayer AG).

### Beispiel 3:

Es wurde, wie in Beispiel 1 beschrieben, vorgegangen. Die Tensiddosierung wurde aber wie folgt durchgeführt:
Polymerisationszeit 0 bis 2 Stunden: Dosierung von 12 l einer 10%igen wässrigen Kaliumlaurat-Lösung. Der Polymerisationsumsatz betrug nach 2 Stunden etwa 20%.
Polymerisationszeit 2 bis 8 Stunden: Dosierung von 36 l einer 10%igen wässrigen Natrium-Alkansulfonat-Lösung (Mersolat K30 der Bayer AG).

### Beispiel 4:

Es wurde, wie in Beispiel 1 beschrieben, vorgegangen. Die Polymerisation wurde unter Vorlage von 10,7 kg eines monomodalen PVC-Saatlatex (200 nm Primärpartikelgröße, 45% Feststoffgehalt) durchgeführt. Die Tensiddosierung wurde wie folgt durchgeführt:
Polymerisationszeit 0 bis 4 Stunden: Dosierung von 19,2 l einer 10%igen wässrigen Natriumdodecylbenzolsulfonat-Lösung (Melon 50 der Henkel KGaA). Der Polymerisationsumsatz betrug nach 4 Stunden etwa 40%.
Polymerisationszeit 4 bis 8 Stunden: Dosierung von 19,2 l einer 10%igen wässrigen Natrium-Laurylsulfat-Lösung (Texapon K12 der Henkel KGaA).

### Vergleichsbeispiel A:

Es wurde wie in Beispiel 1 vorgegangen, mit dem Unterschied, daß die Tensiddosierung nicht sequentiell erfolgte, sondern als Gemisch:
Polymerisationszeit 0 bis 8 Stunden: Tensidmischung aus 12 l einer 10%igen wässrigen Ammoniumlaurat-Lösung und 36 l einer 10%igen wässrigen Natrium-Alkansulfonat-Lösung.

### Vergleichsbeispiel B:

Es wurde wie in Beispiel 2 vorgegangen, mit dem Unterschied, daß die Tensiddosierung nicht sequentiell erfolgte, sondern als Gemisch:
Polymerisationszeit 0 bis 8 Stunden: Tensidmischung aus 24 l einer 10%igen wässrigen Ammoniumlaurat-Lösung und 24 l einer 10%igen wässrigen Natrium-Alkansulfonat-Lösung.

### Vergleichsbeispiel C:

Es wurde wie in Beispiel 3 vorgegangen, mit dem Unterschied, daß die Tensiddosierung nicht sequentiell erfolgte, sondern als Gemisch:
Polymerisationszeit 0 bis 8 Stunden: Tensidmischung aus 12 l einer 10 %-igen, wässrigen Kaliumlaurat-Lösung und 36 l einer 10 %-igen, wässrigen Natrium-Alkansulfonat-Lösung.

### Vergleichsbeispiel D:

Es wurde wie in Beispiel 4 vorgegangen, mit dem Unterschied, daß die Tensiddosierung nicht sequentiell erfolgte, sondern als Gemisch:
Polymerisationszeit 0 bis 8 Stunden: Tensidmischung aus 19,2 l einer 10%igen wässrigen Natriumdodecylbenzolsulfonat-Lösung und 19,2 l einer 10%igen wässrigen Natrium-Laurylsulfat-Lösung.

Die Meßergebnisse der Messungen zu den Beispielen 1 bis 4 und den Vergleichsbeispielen A bis D sind in Tabelle 1 zusammengefaßt.

Der Vergleich der Meßdaten der Beispiele mit den entsprechenden Vergleichsbeispielen zeigt, daß mit der erfindungsgemäßen Vorgehensweise bei gleichem Tensidgehalt und damit vergleichbaren Endprodukteigenschaften des PVC eine deutlich reduzierte Pastenviskosität bei der Verarbeitung als Plastisol erhalten wird.

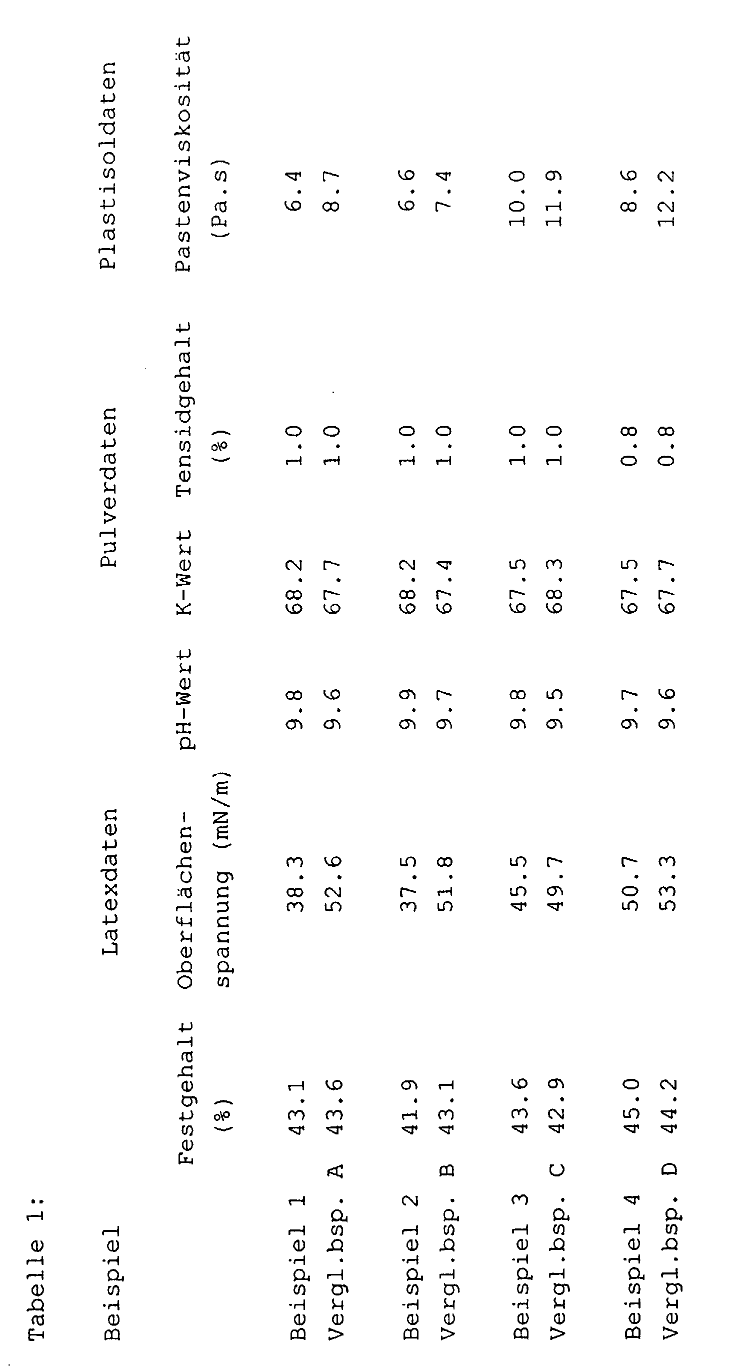

## Patentansprüche

1. Verfahren zur Herstellung von Homo- und Mischpolymerisaten des Vinylchlorids durch diskontinuierliche Polymerisation in wässriger Emulsion in Gegenwart einer Emulgatorkombination aus mindestens zwei Emulgatoren aus der Gruppe der anionischen und nichtionischen Emulgatoren, welche während der Polymerisation zudosiert werden, dadurch gekennzeichnet, daß in der ersten Phase der Polymerisation mindestens ein Emulgator der Emulgatorkombination mit mindestens 10 C-Atomen zudosiert wird und frühestens ab Erreichen eines Polymerisationsumsatzes von 10% mit der Zudosierung der verbleibenden Emulgatoren der Emulgatorkombination begonnen wird.

2. Verfahren nach Anspruch 1, dadurch gekennzeichnet, daß in der ersten Phase der Polymerisation ein oder mehrere Emulgatoren der Emulgatorkombination zudosiert werden, welche zu Produkten mit niederer Pastenviskosität führen.

3. Verfahren nach Anspruch 1 und 2, dadurch gekennzeichnet, daß in der ersten Phase der Polymerisation ein oder mehrere Emulgatoren aus der Gruppe umfassend Alkylarylsulfonate mit 10 bis 24 C-Atomen, Ester der Sulfobernsteinsäure mit einwertigen Alkoholen mit mindestens 10 C-Atomen, Alkylcarboxylate mit einer Kettenlänge von 10 bis 18 C-Atomen zudosiert werden.

4. Verfahren nach Anspruch 3, dadurch gekennzeichnet, daß in der ersten Phase der Polymerisation ein oder mehrere Emulgatoren aus der Gruppe der Alkylarylsulfonate mit 10 bis 24 C-Atomen zudosiert werden.

5. Verfahren nach Anspruch 3, dadurch gekennzeichnet, daß in der ersten Phase der Polymerisation ein oder mehrere Emulgatoren aus der Gruppe der Ester der Sulfobernsteinsäure mit einwertigen Alkoholen oder Alkylphenolen zudosiert werden.

6. Verfahren nach Anspruch 1 bis 5, dadurch gekennzeichnet, daß die Emulgatordosierung in der ersten Phase bis zu einem Polymerisationsumsatz von maximal 40% durchgeführt wird.

7. Verfahren nach Anspruch 1 bis 5, dadurch gekennzeichnet, daß die Emulgatordosierung in der ersten Phase bis zu einem Polymerisationsumsatz von maximal 20% durchgeführt wird.

8. Verfahren nach Anspruch 1 bis 7, dadurch gekennzeichnet, daß mit der Dosierung der verbleibenden Emulgatoren der Emulgatorkombination nach Abschluß der Emulgatordosierung in der ersten Phase begonnen wird.

9. Verwendung der Verfahrensprodukte erhältlich nach den Verfahren gemäß Anspruch 1 bis 8 zur Herstellung von Plastisolen.

## Claims

1. Process for preparing homo- and copolymers of vinyl chloride by batch polymerization in aqueous emulsion in the presence of an emulsifier combination made from at least two emulsifiers selected from the class consisting of the anionic and nonionic emulsifiers, metered in during the polymerization, characterized in that at least one emulsifier of the emulsifier combination having at least 10 carbon atoms is metered in in the first phase of the polymerization and the metering-in of the remaining emulsifiers of the emulsifier combination is not started until a polymerization conversion of at least 10% has been reached.

2. Process according to Claim 1, characterized in that the emulsifiers metered in in the first phase of the polymerization are one or more emulsifiers of the emulsifier combination which give products with low paste viscosity.

3. Process according to Claim [sic] 1 and 2, characterized in that the emulsifiers metered in the first phase of the polymerization are one or more emulsifiers selected from the class encompassing alkylarylsulphonates having from 10 to 24 carbon atoms, sulphosuccinates of monohydric alcohols having at least 10 carbon atoms and alkylcarboxylates with a chain length of from 10 to 18 carbon atoms.

4. Process according to Claim 3, characterized in that the emulsifiers metered in in the first phase of the polymerization are one or more emulsifiers selected from the class consisting of the alkylarylsulphonates having from 10 to 24 carbon atoms.

5. Process according to Claim 3, characterized in that the emulsifiers metered in in the first phase of the polymerization are one or more emulsifiers selected from the class consisting of sulphosuccinates of monohydric alcohols or alkylphenols.

6. Process according to Claim [sic] 1 to 5, characterized in that emulsifier feed in the first phase takes place until the polymerization conversion is not more than 40%.

7. Process according to Claim [sic] 1 to 5, characterized in that emulsifier feed in the first phase takes place until the polymerization conversion is not more than 20%.

8. Process according to Claim [sic] 1 to 7, characterized in that the metering-in of the remaining emulsifiers of the emulsifier combination starts only after emulsifier feed in the first phase has been completed.

9. Use of the products obtainable by the processes according to Claim [sic] 1 to 8 for producing plastisols.

## Revendications

1. Procédé de préparation d'homopolymères et de copolymères de chlorure de vinyle par polymérisation discontinue en émulsion aqueuse en présence d'une combinaison d'émulsifiants à base d'au moins deux émulsifiants choisis parmi le groupe constitué des émulsifiants anioniques et non ioniques, qui sont ajoutés en quantité mesurée durant la polymérisation, caractérisé en ce que dans la première phase de la polymérisation, au moins un émulsifiant de la combinaison d'émulsifiants ayant au moins 10 atomes de carbone est ajouté en quantité mesurée et l'addition en quantité mesurée des émulsifiants restants de la combinaison d'émulsifiants n'est pas commencée tant qu'un taux de conversion par polymérisation de 10% n'a pas été atteint.

2. Procédé selon la revendication 1, caractérisé en ce que dans la première phase de la polymérisation, un ou plusieurs émulsifiant(s) de la combinaison d'émulsifiants sont ajoutés en quantité mesurée, lesquels conduisent à des produits ayant une faible viscosité de pâte.

3. Procédé selon les revendications 1 et 2, caractérisé en ce que dans la première phase de la polymérisation, un ou plusieurs émulsifiant(s) choisis parmi le groupe constitué d'alkylarylsulfonates ayant de 10 à 24 atomes de carbone, de sulfosuccinates d'alcools monohydriques ayant au moins 10 atomes de carbone, de carboxylates d'alkyle ayant une longueur de chaîne de 10 à 18 atomes de carbone, sont ajoutés en quantité mesurée.

4. Procédé selon la revendication 3, caractérisé en ce que dans la première phase de la polymérisation, un ou plusieurs émulsifiant(s) choisis parmi le groupe constitué d'alkylarylsulfonates ayant de 10 à 24 atomes de carbone, sont ajoutés en quantité mesurée.

5. Procédé selon la revendication 3, caractérisé en ce que dans la première phase de la polymérisation, un ou plusieurs émulsifiant(s) choisis parmi le groupe constitué de sulfosuccinates d'alcools monohydriques ou d'alkylphénols sont ajoutés en quantité mesurée.

6. Procédé selon les revendications 1 à 5, caractérisé en ce que l'addition d'émulsifiants en quantité mesurée dans la première phase est réalisée jusqu'à un taux de conversion par polymérisation d'au plus 40%.

7. Procédé selon les revendications 1 à 5, caractérisé en ce que l'addition d'émulsifiants en quantité mesurée dans la première phase est réalisée jusqu'à un taux de conversion par polymérisation d'au plus 20%.

8. Procédé selon les revendications 1 à 7, caractérisé en ce que l'addition en quantité mesurée des émulsifiants restants de la combinaison d'émulsions n'est commencée qu'une fois que l'addition d'émulsifiants en quantité mesurée dans la première phase a été terminée.

9. Utilisation des produits de procédés pouvant être obtenus par les procédés selon les revendications 1 à 8, pour la production de plastisols.
